# FASCICULE DE BREVET EUROPEEN

(11) **EP 3 080 319 B1**
(45) Date de publication et mention de la délivrance du brevet: **19.09.2018**
(21) Numéro de dépôt: 14825362.8
(22) Date de dépôt: 10.12.2014
(51) Int. Cl.: C22C 21/16, C22C 21/18, C22C 21/14, B21C 23/14, C22F 1/057

(54) **PRODUITS FILÉS POUR PLANCHERS D'AVION EN ALLIAGE ALUMINIUM CUIVRE LITHIUM**
STRANGPRESSPRODUKTE FÜR FLUGZEUGBÖDEN AUS EINER ALUMINIUM-KUPFER-LITHIUM-LEGIERUNG
EXTRUDED PRODUCTS FOR AEROPLANE FLOORS MADE OF AN ALUMINIUM-COPPER-LITHIUM ALLOY

(30) Priorité: 13.12.2013 FR 1302931
(43) Date de publication de la demande: 19.10.2016
(73) Titulaire: Constellium Issoire, 63500 Issoire (FR)
(72) Inventeur: PIGNATEL, Jérome, F-44240 La Chapelle sur Erdre (FR); POUGET, Gaëlle, F-38000 Grenoble (FR)
(74) Mandataire: Constellium - Propriété Industrielle
(86) Numéro de dépôt international: PCT/FR2014/000264
(87) Numéro de publication internationale: WO 2015/086917

(56) Documents cités:
- US-A- 6 113 711
- US-A1- 2005 241 735
- US-A1- 2013 255 839
- US-A1- 2013 269 840

## Description

### Domaine de l'invention

L'invention concerne les produits filés en alliages aluminium-cuivre-lithium, plus particulièrement, de tels produits, leurs procédés de fabrication et d'utilisation, destinés notamment à la construction aéronautique et aérospatiale.

### Etat de la technique

Des produits filés en alliage d'aluminium sont développés pour produire des pièces de haute résistance destinées notamment à l'industrie aéronautique et à l'industrie aérospatiale.

Les produits filés en alliage d'aluminium sont utilisés dans l'industrie aéronautique pour de nombreuses applications, tels que les raidisseurs ou lisses de fuselage, les cadres de fuselage, les raidisseurs de voilure, les traverses et poutres de plancher ainsi que les rails de siège.
Le procédé de fabrication des produits filés en alliage Al-Cu-Li utilisés dans l'industrie aéronautique inclut une étape de fabrication d'un produit filé brut, par les étapes de coulée, homogénéisation, filage, mise en solution, trempe, détensionnement pas traction contrôlée et revenu. Cependant le produit filé brut n'est pas utilisé en l'état et est ensuite usiné de façon à obtenir un produit filé usiné présentant la qualité de surface et les caractéristiques géométriques désirées. On dimensionne habituellement le produit filé brut de façon à ce que le produit usiné puisse être obtenu par un usinage limité à quelques millimètres de façon à limiter la perte de métal tout en obtenant la qualité souhaitée.
Certains produits filés utilisés dans l'industrie aéronautique présentent des parties ayant un faible aspect-ratio et des parties ayant un fort aspect-ratio. De manière générale, on appelle « âme » des parties centrales ayant un fort aspect-ratio et « flanc » des parties de faible aspect ratio, dont la direction de la longueur ou de l'épaisseur est sensiblement perpendiculaire à la direction de la longueur de l'âme.

Les flancs sont couramment utilisés pour réaliser des fixations après avoir été percés de façon à y introduire des éléments de fixation tels que des vis.
Il est connu que les propriétés mécaniques sont souvent moins favorables dans les flancs que dans l'âme.
Le brevet US 6,113,711 décrit un procédé de fabrication de produit filés en alliage d'aluminium contenant du lithium dans lequel des parties de faible aspect ratio sont obtenues par filages dans un chemin tortueux de manière à améliorer leurs propriétés mécaniques. Cependant ce chemin tortueux rend le procédé de filage délicat.
La demande de brevet US 2005/0241735 décrit un produit filé pour raidisseurs présentant des quantités augmentées de texture fibres, la texture désirée étant obtenue par filage de zones axisymétriques et en enlevant le métal en excès.
La demande WO2008/012570 décrit un procédé de fabrication d'un raidisseur pour avion dans lequel une forme brute de raidisseur est réalisée avec des bords espacés ayant une enveloppe comprenant toutes les sections désirées pour les raidisseurs usinés.
La demande US 2013/0255839 décrit un produit extrudé, laminé ou forgé en alliage Al-Cu-Li présentant des propriétés améliorées notamment en termes de compromis entre les propriétés mécaniques statiques et la tolérance aux dommages.

Il existe un besoin pour des produits filés en alliage aluminium-cuivre-lithium présentant des propriétés améliorées dans les zones de faible aspect-ratio, notamment en terme de compromis entre les propriétés de résistance mécanique statique et de ténacité et en terme de résistance au pliage après perçage.

### Objets de l'invention

Un premier objet de l'invention est un procédé de fabrication d'un produit filé usiné pour l'industrie aéronautique présentant une âme usinée (11) et au moins un flanc usiné (12) dans lequel
(a) on coule une forme brute en alliage Al-Cu-Li de composition en % en poids, Cu : 2,0 - 6,0 ; Li : 0,5 - 2,0 ; Mg : 0 - 1,0 ; Ag : 0 - 0,7 ; Zn 0 - 1,0 ; et au moins un élément choisi parmi Zr, Mn, Cr, Sc, Hf et Ti, la quantité dudit élément, s'il est choisi, étant de 0,05 à 0,20 % en poids pour Zr, 0,05 à 0,8 % en poids pour Mn, 0,05 à 0,3 % en poids pour Cr et pour Sc, 0,05 à 0,5 % en poids pour Hf et de 0,01 à 0,15 % en poids pour Ti, Si ≤ 0,1 ; Fe ≤ 0,1; autres ≤ 0,05 chacun et ≤ 0,15 au total, reste aluminium,
(b) on homogénéise ladite forme brute,
(c) on déforme à chaud par filage ladite forme brute de façon à obtenir un produit filé brut (2) présentant une âme brute (21) et au moins un flanc brut (22),
(d) on met en solution ledit produit filé brut
(e) on trempe ledit produit filé brut ainsi mis en solution,
(f) on tractionne de façon contrôlée ledit produit filé brut
(g) optionnellement on effectue un dressage ou une mise en forme dudit produit filé,
(h) on réalise un revenu dudit produit filé brut
(i) on usine ledit produit filé brut pour obtenir un produit filé usiné présentant une âme usinée (11) et au moins un flanc usiné (12) correspondant au flanc brut (22)
caractérisé en ce que la dimension dudit flanc brut (E22 ou L22), dont la direction est perpendiculaire à la dimension de la longueur (L21) de ladite âme brute, est au moins 20% supérieure à la longueur dudit flanc usiné (L12).
L'invention a également pour objet un procédé tel que décrit précédemment dans lequel ledit présente une âme brute (21) dont l'aspect ratio est au moins 5 et au moins un flanc brut (22) dont l'aspect ratio est inférieur à 4 et dont la direction de la longueur est sensiblement perpendiculaire à la direction de la longueur de l'âme caractérisé en ce que une portion dudit flanc brut (22) connectant ledit flanc brut à ladite âme brute a une épaisseur décroissante et en ce que le rapport entre l'épaisseur dudit flanc brut (22) pour l'extrémité dudit flanc brut connectée à l'âme (E221) et pour son extrémité opposée à l'âme (E222), soit E221/E222, est inférieur à 0,8 et de préférence inférieur à 0,6 définissant ainsi deux zones concaves sensiblement symétriques.
Encore un autre objet de l'invention est produit filé usiné pour l'industrie aéronautique susceptible d'être obtenu par le procédé selon l'invention, en alliage Al-Cu-Li de composition en % en poids, Cu : 2,0 - 6,0 ; Li : 0,5 - 2,0 ; Mg : 0- 1,0 ; Ag : 0 - 0,7 ; Zn 0 - 1,0 ; et au moins un élément choisi parmi Zr, Mn, Cr, Sc, Hf et Ti, la quantité dudit élément, s'il est choisi, étant de 0,05 à 0,20 % en poids pour Zr, 0,05 à 0,8 % en poids pour Mn, 0,05 à 0,3 % en poids pour Cr et pour Sc, 0,05 à 0,5 % en poids pour Hf et de 0,01 à 0,15 % en poids pour Ti, Si ≤ 0,1 ; Fe ≤ 0,1; autres ≤ 0,05 chacun et ≤ 0,15 au total, reste aluminium, présentant une âme usinée (11) dont l'aspect ratio est au moins 20 et au moins un flanc usiné (12) dont l'aspect ratio est inférieur à 15 et dont la direction de la longueur est sensiblement perpendiculaire à la direction de la longueur de l'âme caractérisé en ce que sa structure granulaire est essentiellement non recristallisée et en ce que entre la mi-longueur dudit flanc usiné et ladite âme usinée la direction de la longueur des grain est substantiellement parallèle à la direction de la longueur du flanc .

### Description des figures

Figure 1 : Schéma général d'un produit filé usiné pour l'industrie aéronautique
Figure 2 : Schéma général d'un produit filé brut et du produit filé usiné correspondant.
Figure 3 : Détail d'une âme et d'un flanc selon l'art antérieur (Figure 3a) et obtenu selon l'invention (Figure 3b)
Figure 4 : Détail d'une âme et d'un flanc obtenus selon un mode préféré de l'invention.
Figure 5 : Détail de l'orientation des grains pour des produits filés usinés selon l'art antérieur (Figure 5a) et selon l'invention (Figures 5b et 5c).

### Description de l'invention

Sauf mention contraire, toutes les indications concernant la composition chimique des alliages sont exprimées comme un pourcentage en poids basé sur le poids total de l'alliage. L'expression 1,4 Cu signifie que la teneur en cuivre exprimée en % en poids est multipliée par 1,4. La désignation des alliages se fait en conformité avec les règlements de The Aluminium Association, connus de l'homme du métier. Les définitions des états métallurgiques sont indiquées dans la norme européenne EN 515.
Les caractéristiques mécaniques statiques en traction, en d'autres termes la résistance à la rupture Rₘ, la limite d'élasticité conventionnelle à 0,2% d'allongement R_{p0,2}, et l'allongement à la rupture A%, sont déterminés par un essai de traction selon la norme NF EN ISO 6892-1, le prélèvement et le sens de l'essai étant définis par la norme EN 485-1.

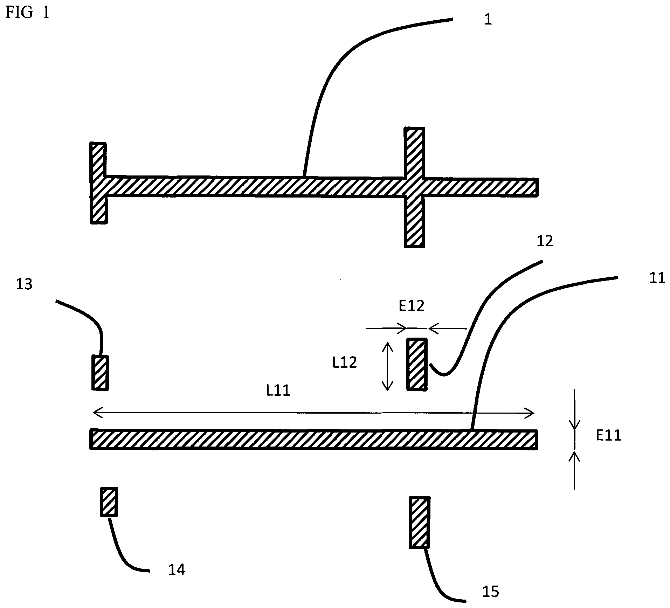

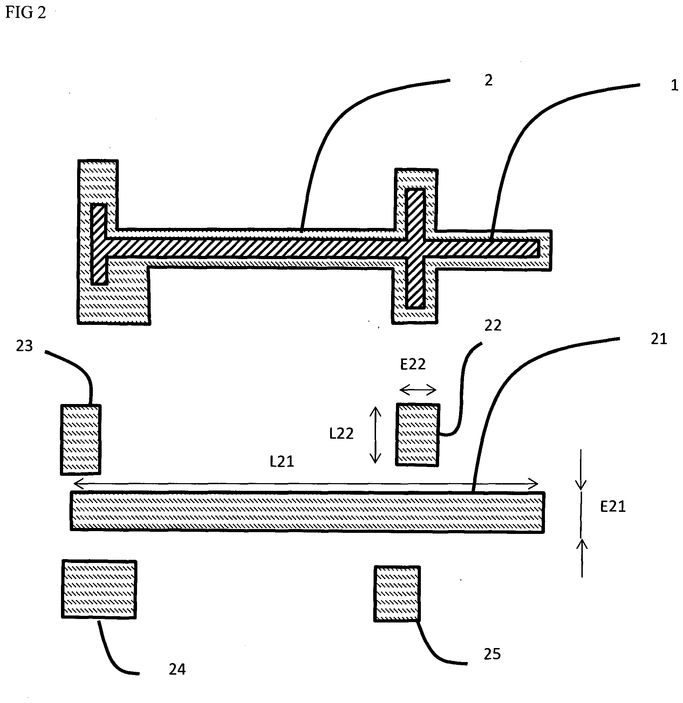

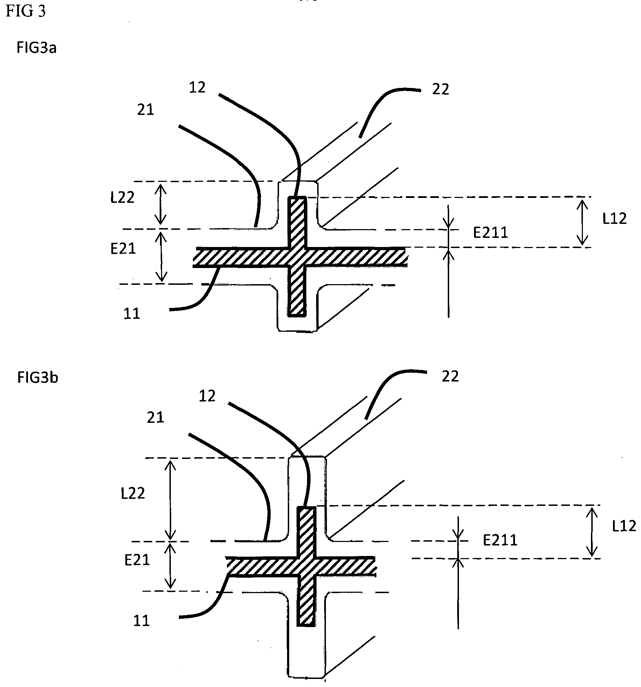

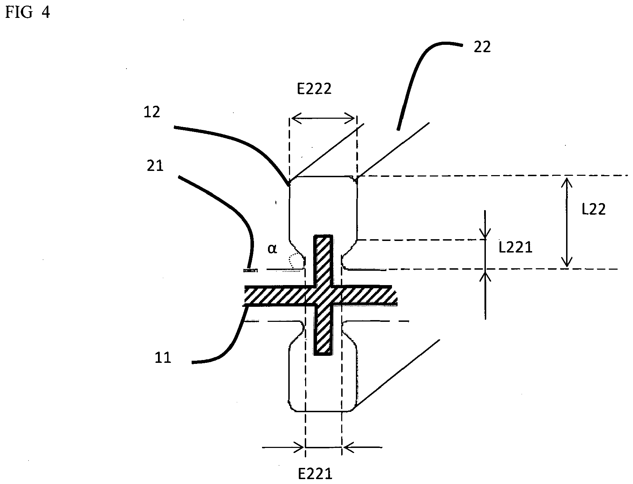

Le facteur d'intensité de contrainte (KQ) est déterminé selon la norme ASTM E399. La norme ASTM E399 donne les critères qui permettent de déterminer si K_{Q} est une valeur valide de K_{1C}. Pour une géométrie d'éprouvette donnée, les valeurs de K_{Q} obtenues pour différents matériaux sont comparables entre elles pour autant que les limites d'élasticité des matériaux soient du même ordre de grandeur.
Sauf mention contraire, les définitions de la norme EN 12258 s'appliquent.
Les présents inventeurs ont constaté que de manière surprenante, pour certains alliages d'aluminium - cuivre - lithium, on peut significativement améliorer les propriétés des flancs d'un produit filé usiné en modifiant la forme du produit filé brut correspondant.
Dans le procédé selon l'invention, on coule une forme brute en alliage Al-Cu-Li de composition en % en poids, Cu : 2,0 - 6,0 ; Li : 0,5 - 2,0 ; Mg : 0- 1,0 ; Ag : 0 - 0,7 ; Zn 0 - 1,0 ; et au moins un élément choisi parmi Zr, Mn, Cr, Sc, Hf et Ti, la quantité dudit élément, s'il est choisi, étant de 0,05 à 0,20 % en poids pour Zr, 0,05 à 0,8 % en poids pour Mn, 0,05 à 0,3 % en poids pour Cr et pour Sc, 0,05 à 0,5 % en poids pour Hf et de 0,01 à 0,15 % en poids pour Ti, Si ≤ 0,1 ; Fe ≤ 0,1; autres ≤ 0,05 chacun et ≤ 0,15 au total, reste aluminium. Préférentiellement, la teneur en cuivre est au moins 2,2 % en poids et /ou au plus 3,3 % en poids. Préférentiellement, la teneur en lithium est au moins 1,2 % en poids et /ou au plus 1,8 % en poids. Préférentiellement, la teneur en magnésium est au moins 0.05 % en poids et /ou au plus 0,8 % en poids. Préférentiellement, la teneur en manganèse est au moins 0,05 % en poids et /ou au plus 0,5 % en poids. Préférentiellement, la teneur en zirconium est au moins 0,06 % en poids et /ou au plus 0,18 % en poids. Dans un mode de réalisation avantageux on ajoute simultanément du manganèse et du zirconium. Préférentiellement, la teneur en argent est au moins 0,1 % en poids et /ou au plus 0,4 % en poids. Préférentiellement, la teneur en zinc est au moins 0,05 % en poids et /ou au plus 0, 8 % en poids. Dans un mode de réalisation de l'invention on ajoute au moins 0,1 % en poids d'argent et on limite la teneur en zinc à moins de 0,2% en poids. Préférentiellement, la teneur en titane est au moins 0,02 % en poids et /ou au plus 0,10 % en poids. Des alliages avantageux pour réaliser l'invention sont notamment les alliages AA2065, AA2195, AA2295, AA2196, AA2296, AA2076, AA2099, AA2199, les alliages AA2196, AA2296, AA2076 sont particulièrement préférés.
La forme brute ainsi obtenue est homogénéisée. La température d'homogénéisation est de préférence située entre 480°C et 540°C pendant 5 à 60 heures. De manière préférée, la température d'homogénéisation est comprise entre 515°C et 525°C. Après homogénéisation, la forme brute est en général refroidie jusqu'à température ambiante avant d'être préchauffée en vue d'être déformée à chaud. Le préchauffage a pour objectif d'atteindre une température initiale de déformation de préférence comprise entre 400°C et 500 °C et de manière préférée de l'ordre de 450 °C à 480 °C permettant la déformation de la forme brute.
La déformation à chaud est effectuée par filage de façon à obtenir un produit filé brut. La forme du produit filé brut est définie en fonction de la forme du produit filé usiné qui sera utilisé dans la structure aéronautique. Dans le cadre de l'invention la section transversale du produit filé est divisée en rectangles élémentaires de dimensions L et E; L étant toujours la plus grande dimension du rectangle élémentaire que l'on appellera longueur et E étant la plus petite dimension du rectangle élémentaire que l'on appellera épaisseur. L'aspect ratio est le rapport L / E. La manière avec laquelle la section transversale est divisée en rectangles élémentaires dans le cadre de l'invention est illustrée par les figures 1 et 2. Dans l'exemple illustratif de la figure 1, le produit filé usiné (1) est divisé en 5 rectangles élémentaires, (11, 12, 13, 14 et 15) en commençant par le rectangle élémentaire ayant l'aspect-ratio le plus élevé (11) et ainsi de suite. De même le produit filé brut (2) est divisé en 5 rectangles élémentaires, (21, 22, 23, 24 et 25) en commençant par le rectangle élémentaire ayant l'aspect-ratio le plus élevé (21) et ainsi de suite. L'invention concerne les produits filés bruts présentant un rectangle élémentaire (21), que l'on appellera « âme brute » ayant un aspect ratio d'au moins 5 et de préférence au moins 8 ou même 10 et au moins un rectangle élémentaire (12, 13, 14, 15) que l'on appellera « flanc brut » d'aspect ratio inférieur à 4 dont la direction de la longueur ou de l'épaisseur est sensiblement perpendiculaire à la direction de la longueur de l'âme et/ou les produits filés usinés présentant un rectangle élémentaire (11), que l'on appellera « âme usinée » ayant un aspect ratio d'au moins 20 ou même au moins 30 et au moins un rectangle élémentaire d'aspect ratio inférieur à 15 (12, 13, 14, 15), que l'on appellera « flanc usiné » dont la direction de la longueur est sensiblement perpendiculaire à la direction de la longueur de l'âme. La figure 2 montre un exemple de section de produit filé brut (2) correspondant à un produit filé usiné (1). On a représenté sur la figure 2 quatre flancs bruts (22, 23, 24 et 25). La dimension du flanc brut dont la direction est perpendiculaire à la direction de la longueur de l'âme brute peut être la longueur (cas des flancs bruts 22, 23, 25) ou l'épaisseur (cas du flanc brut 24). Selon l'invention, la dimension du flanc brut (E22 ou L22) dont la direction est perpendiculaire à la dimension de la longueur (L21) de l'âme brute est au moins 20% supérieure, de préférence au moins 50% supérieure et de manière préférée au moins 80 % supérieure à la longueur du flanc usiné (L12) dont la direction est perpendiculaire à la direction de la longueur (L11) de l'âme usinée. Avantageusement l'aspect ratio du flanc brut est au moins 1,1. Dans un mode de réalisation de l'invention l'aspect ratio du flanc brut est au moins 1,5 et préférentiellement au moins 2. Préférentiellement la dimension du flanc brut dont la direction est perpendiculaire à la direction de la longueur de l'âme brute est la longueur. La figure 3a représente un exemple de produit filé brut selon l'art antérieur, ayant une âme brute (21) représentée partiellement et un flanc brut (22) permettant l'usinage d'un produit filé usiné ayant une âme usinée (11), représentée partiellement, et un flanc usiné (12). Dans le cadre de l'invention le flanc brut (22) correspond au flanc usiné (12). Pour le même produit filé usiné, la figure 3b représente un exemple de produit brut obtenu selon le procédé de l'invention, ayant une âme brute (21) représentée partiellement et un flanc brut (22). Selon l'invention la longueur du flanc brut (L22) est au moins 20% supérieure à la longueur du flanc usiné (L12). Avantageusement, si on considère l'épaisseur (E211) de l'âme brute (21) qui a été usinée sur la face correspondant à un flanc brut (22) et la dimension du flanc brut (E22 ou L22) dont la direction est perpendiculaire à la dimension de la longueur (L21), ces grandeurs sont telles que leur somme est plus de 50% supérieure et de préférence plus de 80 % supérieure à la longueur du flanc usiné (L12).
Un mode de réalisation avantageux de l'invention est illustré par la figure 4. Le flanc (22) a dans la zone connectée à l'âme une portion d'épaisseur décroissante. Dans le cadre de l'invention, dans le cas de variation continue d'épaisseur, on considère pour diviser la section transversale en rectangles élémentaires le rectangle élémentaire englobant la portion présentant localement une épaisseur variable. Dans ce mode de réalisation avantageux, le rapport entre l'épaisseur du flanc brut (22) pour l'extrémité du flanc brut connectée à l'âme (E221) et pour son extrémité opposée à l'âme (E222), soit E221/E222, est inférieur à 0,8 et de préférence inférieur à 0,6 définissant ainsi deux zones concaves sensiblement symétriques. Avantageusement la portion du flanc brut pour laquelle l'épaisseur est décroissante s'étend sur une longueur (L221) inférieure à 30% de la longueur totale du flanc (L22). Préférentiellement, dans ce mode de réalisation, l'angle (a) entre la direction de la longueur de l'âme brute (21) et la direction correspondant à la décroissance d'épaisseur du flanc est 45 +/- 10°. Comme illustré à la figure 4, l'angle (a) est un angle du triangle rectangle dont un premier côté est défini par la direction de la longueur de l'âme brute (L21) et un second côté correspond à la longueur (L221), ledit angle (a) étant opposé au second côté correspondant à la longueur (L221). Avantageusement et comme illustré à la figure 4, la décroissance du flanc brut est linéaire dans une première partie dont la longueur projetée sur une droite parallèle à la direction de la longueur de l'âme brute (L21) est égale à ((E222-E221)/2), la seconde partie étant une zone concave.
Préférentiellement le rayon de courbure pour la connexion du flanc brut (22) et de l'âme (21) est compris entre 2 et 4 mm. Dans le mode de réalisation selon la figure 4, l'aspect ratio du flanc brut est avantageusement compris entre 1,2 et 1,5.
L'invention est plus particulièrement avantageuse pour les produits filés bruts dont l'épaisseur de l'âme (E21) est au moins 12 mm et de préférence au moins 15 mm. L'épaisseur des flancs (E22) des produits filés bruts est avantageusement au moins 10 mm et de préférence au moins 15 mm. Dans le mode de réalisation illustré par la figure 4, l'épaisseur E222 est avantageusement au moins 20 mm et l'épaisseur E221 est avantageusement au moins 10 mm.
Le produit filé brut ainsi obtenu est ensuite mis en solution et trempé. Avantageusement la mise en solution est effectuée à une température comprise entre 490°C et 540 °C pendant 15 min à 8 h et de préférence entre 510°C et 530 °C pendant une durée comprise entre 20 mn et deux heures.

Le produit filé brut ainsi mis en solution et trempé subit ensuite une traction contrôlée, de préférence de 1 à 5 % et préférentiellement d'au moins 2%. Des étapes connues telles que le redressage ou la mise en forme peuvent être optionnellement réalisées avant ou après la traction contrôlée.

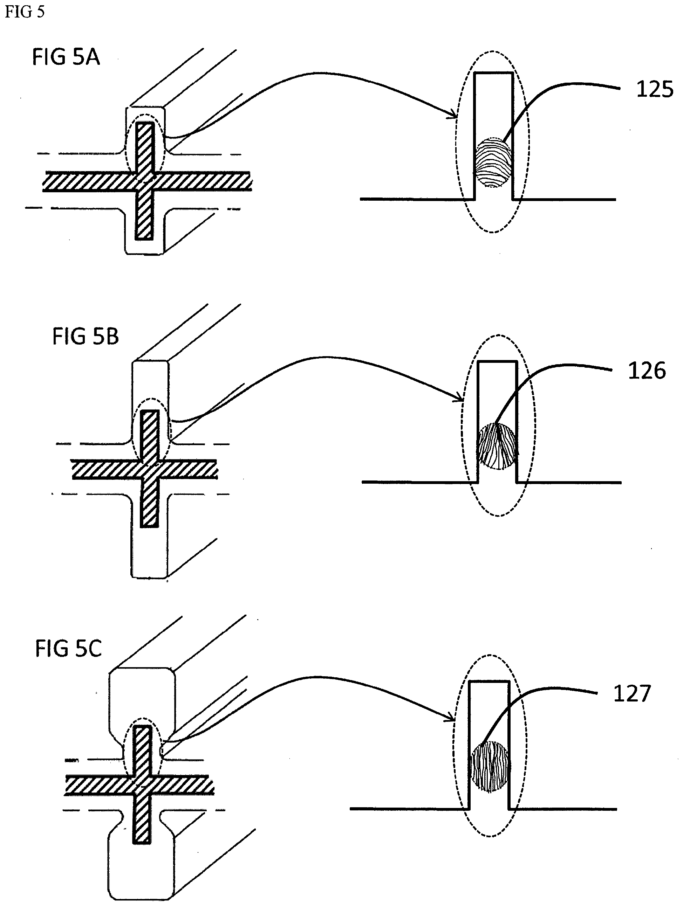

Un revenu est réalisé préférentiellement à une température comprise entre 120 et 170°C pendant 5 à 100 h préférentiellement entre 150 et 160°C pendant 20 à 60 h.
Le produit filé brut est ensuite usiné pour obtenir le produit filé usiné qui est utilisé dans la structure aéronautique. Le produit filé brut peut notamment être usiné pour obtenir un raidisseur de voilure, un raidisseur de fuselage, un cadre de fuselage, une poutre de plancher ou une traverse de plancher. Préférentiellement le produit filé usiné est une traverse de plancher.
L'épaisseur de l'âme (E11) du produit filé usiné est avantageusement comprise entre 2 et 14 mm. La longueur de l'âme (L11) du produit filé usiné est avantageusement au moins 150 mm, préférentiellement au moins 220 mm et de manière préférée au moins 240 mm. La longueur des flancs du produit usiné est avantageusement au moins 10 mm, de préférence au moins 12 mm ou préférentiellement au moins 15 mm et l'épaisseur des flancs du produit filé usiné est avantageusement au moins 2 mm, préférentiellement au moins 3 mm.
Le procédé selon l'invention permet d'obtenir une structure et une orientation de grains avantageuse dans les flancs des produits filés usinés, en particulier entre mi- longueur du flanc et l'âme. La structure granulaire des produits usinés obtenus par le procédé selon l'invention est essentiellement non-recristallisée, le taux de grains recristallisés étant inférieur à 10 %. La figure 5 montre l'orientation des grains dans la zone du flanc usiné entre mi-longueur du flanc usiné et l'âme usinée. Pour un produit filé usiné selon l'art antérieur (Figure 5A) la direction de la longueur des grains (125) entre la mi-longueur du flanc usiné et l'âme usinée est substantiellement parallèle à la direction de la longueur de l'âme. Pour un produit filé usiné selon l'invention (Figures 5B et 5C), la direction de la longueur des grains entre la mi-longueur du flanc usiné et l'âme usinée est substantiellement parallèle à la direction de la longueur du flanc (126, 127). Dans le mode de réalisation avantageux représenté Figure 4 et Figure 5C, l'écart entre la direction de la longueur des grains et la direction de la longueur des flancs est inférieure à 10°.
Les présents inventeurs pensent que, notamment la structure granulaire obtenue du produit filé usiné mais aussi peut-être d'autres facteurs tels que la texture locale, obtenus grâce au procédé selon l'invention permettent l'amélioration de propriétés observée. Ainsi la ténacité des produits filés usinés selon l'invention est dans le flanc selon l'invention, dans la direction S-L, augmentée d'au moins 20 % et même dans certains cas de plus de 50% par rapport au procédé selon l'art antérieur.
Avantageusement pour les produits filés bruts obtenus selon le procédé selon l'invention et/ou usinés selon l'invention la limite d'élasticité dans la direction longitudinale des flancs bruts et des flancs usinés est au moins 450 MPa et de préférence au moins 460 MPa et la ténacité K_{1C S-L} est au moins 15 MPa√m et de préférence au moins 16 MPa√m. De plus la résistance au pliage des flancs usinés après perçage d'un orifice entre l'âme et la mi longueur est significativement améliorée.

Les produits filés usinés selon l'invention sont particulièrement avantageux comme élément de structure pour la construction aéronautique. Ainsi, les produits filés usinés selon l'invention sont avantageusement utilisés pour la construction aéronautique comme raidisseur de voilure, raidisseur de fuselage, cadre de fuselage, poutre de plancher ou une traverse de plancher. Dans un mode de réalisation préféré on utilise les produits selon l'invention comme traverse de plancher.

### Exemple

Dans cet exemple, on a préparé des produits filés usinés en alliage AA2196. Les produits C, D et E présentent un flanc brut tel que la dimension dudit flanc brut dont la direction est perpendiculaire à la dimension de la longueur de l'âme brute est au moins 20% supérieure à la longueur du flanc usiné.
On a coulé et homogénéisé à environ 520 °C des formes brutes en alliage AA2196 .
Les formes brutes ont été filées de façon à obtenir des profilés bruts ayant une âme de longueur et au moins un flanc dont les caractéristiques sont données dans le tableau 1

**Tableau 1 : caractéristiques géométriques des profilés bruts**

| | Longueur âme (mm) | Epaisseur âme (mm) | Longueur flanc (mm) | Epaisseur flanc (mm) |
|---|---|---|---|---|
| A* | 242 | 21 | 20 | 16 |
| B* | 242 | 30 | 22 | 20 |
| C^{α} | 242 | 25 | 25 | 15 |
| D^{α} | 242 | 21 | 36 | 15 |
| E^{α}** | 242 | 21 | 36 | 28 |

| | | | | |
|---|---|---|---|---|
| * direction de l'épaisseur du flanc perpendiculaire à la direction de la longueur de l'âme ^{α} direction de la longueur du flanc perpendiculaire à la direction de la longueur de l'âme ** selon le schéma de la figure 4, l'épaisseur du flanc brut (22) est 15 mm pour l'extrémité du flanc brut connectée à l'âme (E221) et 28 mm pour l'extrémité opposée à l'âme (E222), la portion du flanc brut pour laquelle l'épaisseur est décroissante et inférieure à 28 mm (L221) est de 10 mm, l'angle (α) entre la direction de la longueur de l'âme brute (21) et la direction correspondant à la décroissance d'épaisseur du flanc était de 45°, le rayon de courbure pour la connexion dudit flanc brut (22) et de l'âme (21) était compris entre 2,5 et 3 mm. | | | | |

Les produits filés bruts ainsi obtenus ont été mis en solution à environ 520 °C et trempés puis détensionnés par traction contrôlée et revenus. Ils ont ensuite été usinés pour obtenir des profilés usinés ayant les caractéristiques suivantes : la longueur de l'âme usinée était environ 240 mm, l'épaisseur de l'âme usinée était environ 5 mm, la longueur du flanc usiné était 20 mm et son épaisseur était 2 mm.

Les propriétés mécaniques des flancs ont été caractérisées. Les résultats sont donnés dans le tableau 2. Un test de flexion 3 points a été réalisé après perçage dans le flanc usiné, entre l'âme et la mi-longueur, d'un trou. Les résultats qualitatifs quant à la flexion du flanc sont donnés dans le tableau 2 : - signifiant forte déviation du flanc (- - : très forte) et + signifiant faible déviation du flanc (+ + : très faible).

**Tableau 2 : Propriétés mécaniques**

| | Rm(MPa) | Rp02 (MPa) | A% | K_{1C} (S-L) MPa√m | Test flexion |
|---|---|---|---|---|---|
| A | 547 | 496 | 4,3 | 14 | - - |
| B | 534 | 486 | 4,3 | 11 | - - |
| C | 565 | 515 | 5,3 | 17 | + |
| D | 525 | 471 | 3,8 | 21 | + |
| E | 524 | 472 | 4.4 | 17 | ++ |

| | | | | | |
|---|---|---|---|---|---|
| Les caractéristiques mécaniques statiques et la ténacité ont été mesurées après prélèvement d'éprouvettes dans les flancs bruts des produits filés bruts, dans la direction longitudinale des flancs bruts pour Rₘ, Rp0,2 et A% dans la zone correspondant à celle des flanc des profilés usinés. Les caractéristiques du test de flexion ont observées sur les profilés usinés. | | | | | |

## Revendications

1. Procédé de fabrication d'un produit filé usiné pour l'industrie aéronautique présentant une âme usinée (11) et au moins un flanc usiné (12) dans lequel
(a) on coule une forme brute en alliage Al-Cu-Li de composition en % en poids, Cu : 2,0 - 6,0 ; Li : 0,5 - 2,0 ; Mg : 0- 1,0 ; Ag : 0 - 0,7 ; Zn 0 - 1,0 ; et au moins un élément choisi parmi Zr, Mn, Cr, Sc, Hf et Ti, la quantité dudit élément, s'il est choisi, étant de 0,05 à 0,20 % en poids pour Zr, 0,05 à 0,8 % en poids pour Mn, 0,05 à 0,3 % en poids pour Cr et pour Sc, 0,05 à 0,5 % en poids pour Hf et de 0,01 à 0,15 % en poids pour Ti, Si ≤ 0,1 ; Fe ≤ 0,1; autres ≤ 0,05 chacun et ≤ 0,15 au total, reste aluminium,
(b) on homogénéise ladite forme brute,
(c) on déforme à chaud par filage ladite forme brute de façon à obtenir un produit filé brut (2) présentant une âme brute (21) et au moins un flanc brut (22),
(d) on met en solution ledit produit filé brut
(e) on trempe ledit produit filé brut ainsi mis en solution,
(f) on tractionne de façon contrôlée ledit produit filé brut
(g) optionnellement on effectue un dressage ou une mise en forme dudit produit filé,
(h) on réalise un revenu dudit produit filé brut
(i) on usine ledit produit filé brut pour obtenir un produit filé usiné présentant une âme usinée (11) et au moins un flanc usiné (12) correspondant au flanc brut (22)
**caractérisé en ce que** la dimension dudit flanc brut (E22 ou L22) dont la direction est perpendiculaire à la dimension de la longueur (L21) de ladite âme brute est au moins 20% supérieure à la longueur dudit flanc usiné (L12).

2. Procédé selon la revendication 1 dans lequel l'épaisseur (E211) de l'âme brute (21) qui a été usinée sur la face correspondant à un flanc brut (22) et la dimension dudit flanc brut (E22 ou L22) dont la direction est perpendiculaire à la dimension de la longueur (L21), sont telles que leur somme est plus de 50% supérieure et de préférence plus de 80 % supérieure à la longueur du flanc usiné (L12).

3. Procédé selon la revendication 1 ou la revendication 2 dans lequel une portion dudit flanc brut (22) connectant ledit flanc brut à ladite âme brute a une épaisseur décroissante et en ce que le rapport entre l'épaisseur dudit flanc brut (22) pour l'extrémité dudit flanc brut connectée à l'âme (E221) et pour son extrémité opposée à l'âme (E222), soit E221/E222, est inférieur à 0,8 et de préférence inférieur à 0,6 définissant ainsi deux zones concaves sensiblement symétriques.

4. Procédé selon la revendication 3 dans lequel ladite portion dudit flanc brut pour laquelle l'épaisseur est décroissante s'étend sur une longueur (L221) inférieure à 30% de la longueur totale du flanc (L22).

5. Procédé selon la revendication 3 ou la revendication 4 dans lequel l'angle (a) entre la direction de la longueur de l'âme brute (21) et la direction correspondant à la décroissance d'épaisseur du flanc est 45 +/- 10°.

6. Procédé selon une quelconque des revendications 1 à 5 dans lequel ledit produit filé brut
présente une âme brute (21) dont l'aspect ratio est au moins 5 et au moins un flanc brut (22) dont l'aspect ratio est inférieur à 4 et dont la direction de la longueur est sensiblement perpendiculaire à la direction de la longueur de l'âme **caractérisé en ce que** une portion dudit flanc brut (22) connectant ledit flanc brut à ladite âme brute a une épaisseur décroissante et **en ce que** le rapport entre l'épaisseur dudit flanc brut (22) pour l'extrémité dudit flanc brut connectée à l'âme (E221) et pour son extrémité opposée à l'âme (E222), soit E221/E222, est inférieur à 0,8 et de préférence inférieur à 0,6 définissant ainsi deux zones concaves sensiblement symétriques ;
l'aspect ratio de l'âme brute (21) ou du flanc brut (22) étant le rapport L/E où L correspond à la plus grande dimension du rectangle élémentaire défini dans la section transversale de l'âme brute (21) ou du flanc brut (22) respectivement et E correspond à la plus petite dimension du rectangle élémentaire défini dans la section transversale de l'âme brute (21) ou du flanc brut (22) respectivement.

7. Procédé selon la revendication 6 dans lequel dans lequel ladite portion dudit flanc brut pour laquelle l'épaisseur est décroissante s'étend sur une longueur (L221) inférieure à 30% de la longueur totale du flanc (L22).

8. Procédé selon la revendication 6 ou la revendication 7 dans lequel l'angle (a) entre la direction de la longueur de l'âme brute (21) et la direction correspondant à la décroissance d'épaisseur du flanc est 45 +/- 10°.

9. Procédé selon une quelconque des revendications 6 à 8 dans lequel le rayon de courbure pour la connexion dudit flanc brut (22) et de l'âme (21) est compris entre 2 et 4 mm

10. Produit filé usiné pour l'industrie aéronautique susceptible d'être obtenu par le procédé selon une quelconque des revendications 1 à 9, en alliage Al-Cu-Li de composition en % en poids, Cu : 2,0 - 6,0 ; Li : 0,5 - 2,0 ; Mg : 0- 1,0 ; Ag : 0 - 0,7 ; Zn 0 - 1,0 ; et au moins un élément choisi parmi Zr, Mn, Cr, Sc, Hf et Ti, la quantité dudit élément, s'il est choisi, étant de 0,05 à 0,20 % en poids pour Zr, 0,05 à 0,8 % en poids pour Mn, 0,05 à 0,3 % en poids pour Cr et pour Sc, 0,05 à 0,5 % en poids pour Hf et de 0,01 à 0,15 % en poids pour Ti, Si ≤ 0,1 ; Fe ≤ 0,1; autres ≤ 0,05 chacun et ≤ 0,15 au total, reste aluminium,
présentant une âme usinée (11) dont l'aspect ratio est au moins 20 et au moins un flanc usiné (12) dont l'aspect ratio est inférieur à 15 et dont la direction de la longueur est sensiblement perpendiculaire à la direction de la longueur de l'âme **caractérisé en ce que** sa structure granulaire présente un taux de grains recristallisés inférieur à 10% et **en ce que** entre la mi-longueur dudit flanc usiné et ladite âme usinée la direction de la longueur des grain est substantiellement parallèle à la direction de la longueur du flanc,
l'aspect ratio de l'âme usinée (11) ou du flanc usiné (12) étant le rapport L/E où L correspond à la plus grande dimension du rectangle élémentaire défini dans la section transversale de l'âme usinée (11) ou du flanc usiné (12) respectivement et E correspond à la plus petite dimension du rectangle élémentaire défini dans la section transversale de l'âme usinée (11) ou du flanc usiné (12) respectivement.

11. Produit filé usiné selon la revendication 10 dans lequel l'écart entre la direction de la longueur des grains et la direction de la longueur des flancs est inférieur à 10°.

12. Utilisation d'un produit filé usiné selon la revendication 10 ou la revendication 11 comme élément de structure pour la construction aéronautique.

13. Utilisation selon la revendication 12 comme raidisseur de voilure, raidisseur de fuselage, cadre de fuselage, poutre de plancher ou une traverse de plancher, préférentiellement comme traverse de plancher.

## Patentansprüche

1. Verfahren zur Herstellung eines bearbeiteten Strangpressproduktes für die Luftfahrtindustrie mit einem bearbeiteten Kern (11) und mindestens einer bearbeiteten Flanke (12), wobei
(a) eine Rohform gegossen wird, bestehend aus einer Al-Cu-Li-Legierung mit der Zusammensetzung (in Gew.-%) Cu: 2,0 - 6,0 ; Li: 0,5 - 2,0 ; Mg: 0 - 1,0 ; Ag: 0 - 0,7 ; Zn: 0 - 1,0 ; und mindestens ein Element ausgewählt unter Zr, Mn, Cr, Sc, Hf und Ti, wobei die Menge des Elements, falls ausgewählt, 0,05 bis 0,20 Gew.-% für Zr, 0,05 bis 0,8 Gew.-% für Mn, 0,05 bis 0,3 Gew.-% für Cr und für Sc, 0,05 bis 0,5 Gew.-% für Hf und 0,01 bis 0,15 Gew.-% für Ti beträgt, Si ≤ 0,1, Fe ≤ 0,1 ; weitere Elemente jeweils ≤ 0,05 und insgesamt ≤ 0,15, Rest Aluminium,
(b) die Rohform homogenisiert wird,
(c) die Rohform durch Strangpressen warmumgeformt wird, um ein rohes Strangpressprodukt (2) mit einem rohen Kern (21) und mindestens einer rohen Flanke (22) zu erhalten,
(d) das rohe Strangpressprodukt lösungsgeglüht wird,
(e) das lösungsgeglühte rohe Strangpressprodukt abgeschreckt wird,
(f) das rohe Strangpressprodukt kontrolliert gereckt wird,
(g) das Strangpressprodukt gegebenenfalls gerichtet oder geformt wird,
(h) das rohe Strangpressprodukt ausgelagert wird,
(i) das rohe Strangpressprodukt bearbeitet wird, um ein bearbeitetes Strangpressprodukt mit einem bearbeiteten Kern (11) und mindestens einer bearbeiteten Flanke (12) zu erhalten, die der rohen Flanke (22) entspricht, **dadurch gekennzeichnet, dass** die Abmessung der rohen Flanke (E22 oder L22), deren Richtung senkrecht zur Längsabmessung (L21) des rohen Kerns verläuft, mindestens 20 % größer ist als die Länge der bearbeiteten Flanke (L12).

2. Verfahren nach Anspruch 1, wobei die Dicke (E211) des rohen Kerns (21), der auf der einer rohen Flanke (22) entsprechenden Seite bearbeitet wurde, und die Abmessung der rohen Flanke (E22 oder L22), deren Richtung senkrecht zur Längsabmessung (L21) verläuft, so gewählt sind, dass ihre Summe mehr als 50 % größer ist und vorzugsweise mehr als 80 % größer ist als die Länge der bearbeiteten Flanke (L12).

3. Verfahren nach Anspruch 1 oder Anspruch 2, wobei ein Abschnitt der rohen Flanke (22), der die rohe Flanke mit dem rohen Kern verbindet, eine abnehmende Dicke aufweist, und dass das Verhältnis zwischen der Dicke der rohen Flanke (22) für das mit dem Kern verbundene Ende der rohen Flanke (E221) und für das dem Kern gegenüberliegende Ende der rohen Flanke (E222), d. h. E221/E222, weniger als 0,8 und vorzugsweise weniger als 0,6 beträgt, wodurch zwei im Wesentlichen symmetrische konkave Zonen definiert werden.

4. Verfahren nach Anspruch 3, wobei sich der Abschnitt der rohen Flanke, wo die Dicke abnimmt, über eine Länge (L221) erstreckt, die kleiner ist als 30% der Flankengesamtlänge (L22).

5. Verfahren nach Anspruch 3 oder Anspruch 4, wobei der Winkel (α) zwischen der Längsrichtung des rohen Kerns (21) und der Richtung, die der Dickenabnahme der Flanke entspricht, 45 +/- 10° beträgt.

6. Verfahren nach irgendeinem der Ansprüche 1 bis 5, wobei das rohe Strangpressprodukt einen rohen Kern (21) mit einem Seitenverhältnis von mindestens 5 und mindestens eine rohe Flanke (22) aufweist, deren Seitenverhältnis kleiner als 4 ist und deren Längsrichtung im Wesentlichen senkrecht zur Längsrichtung des Kerns verläuft, **dadurch gekennzeichnet, dass** ein Abschnitt der rohen Flanke (22), der die rohe Flanke mit dem rohen Kern verbindet, eine abnehmende Dicke aufweist, und dass das Verhältnis zwischen der Dicke der rohen Flanke (22) für das mit dem Kern verbundene Ende der rohen Flanke (E221) und für das dem Kern gegenüberliegende Ende der rohen Flanke (E222), d. h. E221/E222, kleiner als 0,8 und vorzugsweise kleiner als 0,6 ist, wodurch zwei im Wesentlichen symmetrische konkave Zonen definiert werden;
wobei das Seitenverhältnis des rohen Kerns (21) oder der rohen Flanke (22) das Verhältnis L/E ist, wobei L der größten Abmessung des im Querschnitt des rohen Kerns (21) bzw. der rohen Flanke (22) definierten Elementarrechtecks entspricht und E der kleinsten Abmessung des im Querschnitt des rohen Kerns (21) bzw. der rohen Flanke (22) definierten Elementarrechtecks entspricht.

7. Verfahren nach Anspruch 6, wobei sich der Abschnitt der rohen Flanke, wo die Dicke abnimmt, über eine Länge (L221) erstreckt, die 30% kleiner ist als die Flankengesamtlänge (L22).

8. Verfahren nach Anspruch 6 oder Anspruch 7, wobei der Winkel (α) zwischen der Längsrichtung des rohen Kerns (21) und der Richtung, die der Dickenabnahme der Flanke entspricht, 45 +/- 10° beträgt.

9. Verfahren nach irgendeinem der Ansprüche 6 bis 8, wobei der Krümmungsradius für die Verbindung der rohen Flanke (22) mit dem Kern (21) zwischen 2 und 4 mm liegt.

10. Bearbeitetes Strangpressprodukt für die Luftfahrtindustrie erhältlich durch das Verfahren nach irgendeinem der Ansprüche 1 bis 9, aus einer Al-Cu-Li-Legierung mit der Zusammensetzung (in Gew.-%) Cu: 2,0 - 6,0 ; Li: 0,5 - 2,0 ; Mg: 0 - 1,0 ; Ag: 0 - 0,7 ; Zn: 0 - 1,0 ; und mindestens ein Element ausgewählt unter Zr, Mn, Cr, Sc, Hf und Ti, wobei die Menge des Elements, falls ausgewählt, 0,05 bis 0,20 Gew.-% für Zr, 0,05 bis 0,8 Gew.-% für Mn, 0,05 bis 0,3 Gew.-% für Cr und für Sc, 0,05 bis 0,5 Gew.-% für Hf und 0,01 bis 0,15 Gew.-% für Ti beträgt, Si ≤ 0,1; Fe ≤ 0,1; weitere Elemente jeweils ≤ 0,05 und insgesamt ≤ 0,15, Rest Aluminium,
mit einem bearbeiteten Kern (11), dessen Seitenverhältnis mindestens 20 beträgt, und mit mindestens einer bearbeiteten Flanke (12), deren Seitenverhältnis kleiner als 15 ist und deren Längsrichtung im Wesentlichen senkrecht zur Längsrichtung des Kerns verläuft, **dadurch gekennzeichnet, dass** seine Kornstruktur einen Anteil an rekristallisierten Körnern von weniger als 10 % aufweist und dass zwischen der halben Länge der bearbeiteten Flanke und dem bearbeiteten Kern die Längsrichtung der Körner im Wesentlichen parallel zur Längsrichtung der Flanke verläuft,
wobei das Seitenverhältnis des bearbeiteten Kerns (11) oder der bearbeiteten Flanke (12) das Verhältnis L/E ist, wobei L der größten Abmessung des im Querschnitt des bearbeiteten Kerns (11) bzw. der bearbeiteten Flanke (12) definierten Elementarrechtecks entspricht und E der kleinsten Abmessung des im Querschnitt des bearbeiteten Kerns (11) bzw. der bearbeiteten Flanke (12) definierten Elementarrechtecks entspricht.

11. Bearbeitetes Strangpressprodukt nach Anspruch 10, wobei die Differenz zwischen der Längsrichtung der Körner und der Längsrichtung der Flanken weniger als 10° beträgt.

12. Verwendung eines bearbeiteten Strangpressproduktes nach Anspruch 10 oder Anspruch 11 als Strukturelement für den Flugzeugbau.

13. Verwendung nach Anspruch 12 als Tragflächenversteifung, Rumpfversteifung, Rumpfrahmen, Bodenbalken oder Bodenquerträger, vorzugsweise als Bodenquerträger.

## Claims

1. Method for manufacturing a machined extruded product for the aeronautical industry having a machined core (11) and at least one machined flank (12) wherein
(a) an unprocessed form made of an Al-Cu-Li alloy is cast with the following composition, as weight percentages: Cu: 2.0 - 6.0; Li: 0.5 - 2.0; Mg: 0 - 1.0; Ag: 0 - 0.7; Zn 0 - 1.0; and at least one element selected among Zr, Mn, Cr, Sc, Hf and Ti, the amount of said element, if chosen, being 0.05 to 0.20 wt % for Zr, 0.05 to 0.8 wt % for Mn, 0.05 to 0.3 wt % for Cr and for Sc, 0.05 to 0.5 wt % for Hf and 0.01 to 0.15 wt % for Ti, Si ≤ 0.1; Fe ≤ 0.1; others ≤ 0.05 each and ≤ 0.15 in total, the balance being aluminum,
(b) said unprocessed form is homogenized,
(c) said unprocessed form is deformed by melt spinning in such a way as to obtain an unprocessed extruded product (2) having an unprocessed core (21) and at least one unprocessed flank (22),
(d) said unprocessed extruded product is put into solution
(e) said unprocessed extruded product put into solution as such is quenched,
(f) said unprocessed extruded product undergoes traction in a controlled manner
(g) optionally a straightening or a forming of said extruded product is carried out,
(h) said unprocessed extruded product is tempered
(i) said unprocessed extruded product is machined in order to obtain a machined extruded product having a machined core (11) and at least one machined flank (12) corresponding to the unprocessed flank (22)
**characterized in that** the dimension of said unprocessed flank (E22 or L22) of which the direction is perpendicular to the dimension of the length (L21) of said unprocessed core is at least 20% greater than the length of said machined flank (L12).

2. Method according to claim 1 wherein the thickness (E211) of the unprocessed core (21) that was machined on the face corresponding to an unprocessed flank (22) and the dimension of said unprocessed flank (E22 or L22) of which the direction is perpendicular to the dimension of the length (L21), as such that their sum is more than 50% greater and more preferably more than 80% greater than the length of the machined flank (L12).

3. Method according to claim 1 or claim 2 wherein a portion of said unprocessed flank (22) connecting said unprocessed flank to said unprocessed core has a decreasing thickness and in that the ratio of the thickness of said unprocessed flank (22) for the end of said unprocessed flank connected to the core (E221) and for the end thereof opposite the core (E222), i.e. E221/E222, is less than 0.8 and preferably less than 0.6 thus defining two substantially symmetrical concave areas.

4. Method according to claim 3 wherein said portion of said unprocessed flank for which the thickness is decreasing extends over a length (L221) less than 30% of the total length of the flank (L22).

5. Method according to claim 3 or claim 4 wherein the angle (α) between the lengthwise direction of the unprocessed core (21) and the direction corresponding to the decrease in the thickness of the flank is 45 +/-10°.

6. Method according to any of claims 1 to 5 wherein said unprocessed extruded product has an unprocessed core (21) of which the aspect ratio is at least 5 and at least one unprocessed flank (22) of which the aspect ratio is less than 4 and of which the direction of the length is substantially perpendicular to the lengthwise direction of the core **characterized in that** a portion of said unprocessed flank (22) connecting said unprocessed flank to said unprocessed core has a decreasing thickness and **in that** the ratio of the thickness of said unprocessed flank (22) for the end of said unprocessed flank connected to the core (E221) and for the end thereof opposite the core (E222), i.e. E221/E222, is less than 0.8 and preferably less than 0.6 thus defining two substantially symmetrical concave areas;
the aspect ratio of the unprocessed core (21) or of the unprocessed flank (22) being the ratio L/E where L corresponds to the greatest dimension of the basic rectangle defined in the cross-section of the unprocessed core (21) or of the unprocessed flank (22) respectively and E corresponds to the smallest dimension of the basic rectangle defined in the cross-section of the unprocessed core (21) or of the unprocessed flank (22) respectively.

7. Method according to claim 6 wherein said portion of said unprocessed flank for which the thickness is decreasing extends over a length (L221) less than 30% of the total length of the flank (L22).

8. Method according to claim 6 or claim 7 wherein the angle (α) between the lengthwise direction of the unprocessed core (21) and the direction corresponding to the decrease in the thickness of the flank is 45 +/-10°.

9. Method according to any of claims 6 to 8 wherein the radius of curvature for the connection of said unprocessed flank (22) and of the core (21) is between 2 and 4 mm.

10. Machined extruded product for the aeronautical industry able to be obtained by the method according to any of claims 1 to 9, made of an Al-Cu-Li alloy with the following composition, as weight percentages: Cu: 2.0 - 6.0; Li: 0.5 - 2.0; Mg: 0 - 1.0; Ag: 0 - 0.7; Zn 0 - 1.0; and at least one element selected among Zr, Mn, Cr, Sc, Hf and Ti, the amount of said element, if chosen, being 0.05 to 0.20 wt % for Zr, 0.05 to 0.8 wt % for Mn, 0.05 to 0.3 wt % for Cr and for Sc, 0.05 to 0.5 wt % for Hf and 0.01 to 0.15 wt % for Ti, Si ≤ 0.1; Fe ≤ 0.1; others ≤ 0.05 each and ≤ 0.15 in total, the balance being aluminum,
having a machined core (11) of which the aspect ratio is at least 20 and at least one machined flank (12) of which the aspect ratio is less than 15 and of which the direction of the length is substantially perpendicular to the lengthwise direction of the core **characterized in that** its granular structure has a rate of recrystallized grains less than 10% and **in that** between the mid-length of said machined flank and said machined core the direction of the length of the grain is substantially parallel to the lengthwise direction of the flank,
the aspect ratio of the machined core (11) or of the machined flank (12) being the ratio L/E where L corresponds to the greatest dimension of the basic rectangle defined in the cross-section of the machined core (11) or of the machined flank (12) respectively and E corresponds to the smallest dimension of the basic rectangle defined in the cross-section of the machined core (11) or of the machined flank (12) respectively.

11. Machined extruded product according to claim 10 wherein the difference between the direction of the length of the grains and the direction of the length of the flanks is less than 10°.

12. Use of a machined extruded product according to claim 10 or claim 11 as a structural element for aeronautical construction.

13. Use according to claim 12 as a wing stiffener, fuselage stiffener, fuselage frame, floor beam or a floor girder, preferentially as a floor girder.
